## Europäisches Patentamt

## European Patent Office

## Office européen des brevets

(11) Veröffentlichungsnummer: **0 259 400**
**B1**

(12) **EUROPÄISCHE PATENTSCHRIFT**

(45) Veröffentlichungstag der Patentschrift: 26.09.90

(21) Anmeldenummer: 87901393.6

(22) Anmeldetag: 17.03.87

(86) Internationale Anmeldenummer:
PCT/DE87/00112

(87) Internationale Veröffentlichungsnummer:
WO 87/05594 24.09.87 Gazette 87/21

(51) Int. Cl.⁵: **C 03 B 40/02**, C 03 B 9/48,
C 03 B 11/08

(54) VERWENDUNG EINES OXIDKERAMIK-WERKSTOFFS FÜR PRESSWERKZEUGE ZUM AUSFORMEN VON BAUTEILEN AUS GLAS ODER EINER GLASHALTIGEN KERAMIK HOHER OBERFLäCHENGüTE UND MASSGENAUIGKEIT.

(30) Priorität: 17.03.86 DE 3608854

(43) Veröffentlichungstag der Anmeldung:
16.03.88 Patentblatt 88/11

(45) Bekanntmachung des Hinweises auf die
Patenterteilung:
26.09.90 Patentblatt 90/39

(84) Benannte Vertragsstaaten:
AT CH DE FR GB IT LI

(56) Entgegenhaltungen:
WO-A-85/00162
FR-A-2 322 835
US-A-3 141 756
US-A-3 728 098

(73) Patentinhaber: Wild Leitz GmbH
Ernst-Leitz-Strasse 30 Postfach 20 20
D-6330 Wetzlar 1 (DE)

(72) Erfinder: KRIEGESMANN, Jochen
Rathausstr. 93
D-5410 Höhr-Grenzhausen (DE)
Erfinder: FRANEK, Henning
Mühlenkopstr. 5
D-6333 Braunfels-Tiefenbach (DE)
Erfinder: BLÜTHGEN, Waldemar
Sälzerweg 44
D-6333 Braunfels (DE)

Courier Press, Leamington Spa, England.

**Beschreibung**

Die Erfindung betrifft die Verwendung polykristalliner oxidkeramischer Werkstoffe für Preßwerkzeuge zur Herstellung von Bauteilen aus Glas oder aus einer glashaltigen Keramik hoher Güte und Maßgenauigkeit. Die so hergestellten Optik-Bauteile müssen aufgrund ihrer Formgenauigkeit und Oberflächenbeschaffenheit keinem weiteren aufwendigen Bearbeitungsprozeß wie Fräsen, Schleifen, Polieren usw. unterworfen werden.

Aus der WO 85/00162 sind bereits Preßwerkzeuge für optische Bauelemente bekannt, die aus nichtmetallischanorganischen Werkstoffen, wie z.B. aus NiO, $Cr_2O_3$, Saphir oder Spinell, in monokristalliner oder polykristalliner Form bestehen. Diese Materialien sind zwar bezüglich ihrer Kontaktinertheit insbesondere für den Einsatz bei hohen Temperaturen geeignet; es ergeben sich jedoch durch deren Festigkeitsverhalten sowie im Falle der monokristallinen Materialien durch deren anisotropen Charakter erhebliche Schwierigkeiten bei der Herstellung der Preßwerkzeuge und bei den damit durchgeführten Preßvorgängen selbst.

Monokristalline Substanzen, also sogenannte "Einkristalle", weisen eine Anisotropie ihrer physikalischen, chemischen, mechanischen und thermischen Eigenschaften auf; d.h., die hier aufgeführten Eigenschaften ändern sich in Abhängigkeit von der jeweils vorliegenden kristallographischen Orientierung.

So ist z.B. die Härte und damit die Abriebfestigkeit von Einkristallen je nach Orientierung unterschiedlich. Allein dieser Tatbestand führt schon beim Polieren zu unterschiedlichen Abtragsraten, so daß die Präzision der Formgebung, die bei solchen Werkzeugen im Nanometer-Bereich liegt, nur schwer erreichbar ist.

Da das Werkzeug beim eigentlichen Preßvorgang auf hohe Temperaturen aufgeheizt werden muß, findet eine durch die Wärme verursachte Materialausdehnung statt. Bei monokristallinen Werkstoffen ist diese wiederum von der kristallographischen Orientierung des betreffenden Einkristalls abhängig. Das bedeutet, daß sich die bei Raumtemperatur vorliegende Geometrie des Preßwerkzeugs derart verändert, daß die auszuformenden Optik-Bauteile nicht die gewünschte bzw. erforderliche optische Präzisions-Passe aufweisen. Dies hat dann zur Folge, daß aufwendige mathematische Rechenoperationen zur Retro-Korrektur des Werkzeugs notwendig werden. Als weiterer Nachteil ist es bei einem Einkristall-Material anzusehen, daß die Herstellung einer gewünschten Raumform, beispielsweise einer tiegelförmigen Mulde, nur dann vorgenommen werden kann, wenn der Kristall vorher mittels aufwendiger licht- oder röntgenoptischer Methoden bezüglich seiner Kristallachsen exakt orientiert ausgerichtet und gehalten wurde.

Zusätzlich zu der bei nichtkubischen Einkristallen anzutreffenden Wärmedehnungsanisotropie bereitet noch die Anisotropie der elastischen Konstanten, die ebenso wie die bereits besprochene Härteanisotropie und die weiter unten noch zu besprechende Wärmeleitfähigkeitsanisotropie auch für höchstsymmetrische kubische Einkristalle gilt, Schwierigkeiten, da der Preßvorgang logischerweise unter Druck abläuft und somit auch eine kristallorientierungsabhängige elastische Dehnung bzw. Stauchung mit berücksichtigt werden muß.

Die Anisotropie der Wärmeleitfähigkeit wirkt sich in der Weise negativ aus, daß es sowohl im Preßwerkzeug als auch im Preßling selbst zu lokalen Überhitzungen und damit zu thermisch induzierten mechanischen Spannungen und Verzugserscheinungen kommt.

Bezüglich des Festigkeitsverhaltens erweisen sich Monokristalle als äußerst spröde. Als Maß für die Sprödigkeit ist der sog. kritische Spannungsintensitätsfaktor $K_{Ic}$ anzusehen. Es gilt:

$$K_{Ic} = \sigma \cdot \sqrt{a} \cdot f \quad [MN/m^{3/2}]$$

Dabei bedeuten:

σ: die von außen angelegte Zugspannung beim Bruch;

a: die Länge eines senkrecht zur äußeren Zugspannung angeordneten Risses und

f: einen Geometriefaktor.

Beispielsweise beträgt dieser Wert für monokristallines Aluminiumoxid lediglich:

$$K_{Ic}(Al_2O_3) = 2 \ MNm^{-3/2}.$$

Dies bedeutet für den Einsatz von Einkristall-Werkzeugen prinzipiell eine erhöhte Bruchgefahr unter mechanischen und thermischen Belastungen.

Bezüglich der für den vorgesehenen Verwendungszweck bislang eingesetzten polykristallinen Materialien ist festzustellen, daß deren Festigkeitsverhalten, insbesondere deren Bruchwiderstands-Werte, für eine Vielzahl von Preßvorgängen nicht geeignet sind. Es kommt daher bei den extremen Preßverfahrensbedingungen zu schnellen Verschließerscheinungen und damit zu Abweichungen von der gewünschten Raumform der gepreßten Präzisionsoptikteile.

Es ist daher Aufgabe der vorliegenden Erfindung, solche Materialien als Werkstoffe für Preßwerkzeuge für optische Bauelemente anzugeben, die die Nachteile der für den genannten Verwendungszweck bekannten Materialien nicht aufweisen, sondern erhöhte Bruchwiderstandswerte sowie eine extreme Härte in ihren ausgeformten Oberflächenbereichen aufweisen und die daher einen wesentlich längeren Einsatz als Preßwerkzeuge unter Beibehaltung ihrer jeweiligen geometrischen Raumformen unter den extremen physikochemischen, thermischen und mechanischen Verfahrensbedingungen gestatten.

Diese Aufgabe wird durch die Verwendung eines polykristallinen Oxidkeramik-Werkstoffs für Preßwerkzeuge zum Ausformen von Bauteilen aus Glas oder aus einer glashaltigen Keramik hoher Güte und Maßgenauigkeit dadurch gelöst, daß der vorgesehene Oxidkeramik-Werkstoff aus

einer mehrphasigen $ZrO_2$- und/oder $HfO_2$-verstärkten Keramik besteht, die sich aus einer Matrix-Komponente und mindestens einer in ihr diskret dispergierten Partikel-Komponente zusammensetzt. Zweckmäßigerweise kann die Matrix-Komponente eine Keramik aus kubischem und/oder tetragonalem $ZrO_2$ oder aus kubischem und/oder tetragonalem $HfO_2$ oder aus einer kubischen und/oder tetragonalen $(Zr, Hf)O_2$-Mischkristallphase sein. Die Matrix-Komponente kann jedoch auch aus $Al_2O_3$ und/oder $Cr_2O_3$ bestehen. Darüber hinaus kann es zweckmäßig sein, daß die Keramik aus mindestens zwei Matrix-Komponenten besteht. Es ist auch möglich, daß der Werkstoff aus einer polykristallinen Matrix besteht, in der als diskrete Partikeln $ZrO_2$- und/oder $HfO_2$- und/oder $(Zr, Hf)O_2$-Kristallite homogen verteilt sind. Dabei können diese Partikeln polymorphe Modifikationen aufweisen, wobei sie zumindest im Oberflächenbereich des Werkstoffs jeweils in ihrer niedersymmetrischen Kristallgitterstruktur auftreten. So ist eine spezielle Ausführungsform dadurch gekennzeichnet, daß die Partikeln im Oberflächenbereich des Werkstoffs eine monokline und diejenige im Werkstoff-Innenbereich eine tetragonale Kristallgitterstruktur aufweisen. Es ist zweckmäßig, daß die Partikeln eine Größe zwischen 5 und 5000 Nanometer (nm)—vorzugsweise zwischen 100 und 1000 nm—aufweisen.

Auch ist es möglich, daß die polykristalline Matrix-Komponente aus mindestens einer der nachfolgenden Substanzen besteht: aus kubischem $ZrO_2$, $Al_2O_3$, $Cr_2O_3$, aus einem Al-Cr-Mischoxid $((Al, Cr)_2O_3)$ oder aus einem Spinell (beispielsweise $MgO \cdot Al_2O_3$). Der für die erfindungsgemäße Verwendung vorgesehene Werkstoff kann weiterhin aus kubischem $ZrO_2$ als Matrix-Komponente bestehen, in welcher tetragonale $ZrO_2$- und/oder $HfO_2$- und/oder $(Zr, Hf)O_2$-Kristallite als diskrete Partikeln verteilt sind. Dabei ist es vorteilhaft, daß die tetragonalen Partikeln in kohärent auskristallisierter Form in der Matrix vorliegen. Die Keramik kann nach einer Weiterbildung der vorliegenden Erfindung zusätzlich mindestens eines der nachfolgend aufgeführten teilstabilisierenden Oxide enthalten (jeweils in Mol-%): Yttriumoxid $(Y_2O_3)$: 3,5 bis 12; Ceroxid $(CeO_2)$: 3,5 bis 12; Magnesiumoxid (MgO): 6 bis 16; Calciumoxid (CaO): 6 bis 16 und Oxide der Seltenen Erden (SE-Oxide): 3,5 bis 12. Dabei weist die Keramik nach einer Untervariante vorteilhafterweise ein $CeO_2$-$ZrO_2$-Mol-Verhältnis zwischen 8/92 und 30/70 auf. Weiterhin ist es möglich, daß der Werkstoff ausschließlich aus mindestens einer der für die Matrix-Komponente vorgesehenen Substanzen besteht. Auch können zusätzlich bis zu 2 Gewichts-% Dotierungsstoffe aus der Gruppe der Oxide: MgO, Nickeloxid (NiO), Wolframoxid $(WO_3)$ und/oder Molybdänoxid $(MoO_3)$ vorhanden sein. Die Dichte des für die erfindungsgemäße Verwendung vorgesehenen Werkstoffs beträgt mindestens 95%—vorzugsweise 100%—der theoretischen Dichte. Nach einer besonderen Ausführungsform der vorläufigen Erfindung besteht der Werkstoff aus einer einphasigen $ZrO_2$- und/oder $HfO_2$-verstärkten TZP-Keramik ("Tetragonal Zirconia Polycrystals"—Keramik).

Die Vorteile der angegebenen polykristallinen, ein- oder mehrphasigen Oxidkeramik-Werkstoffe als Material für Preßwerkzeuge zum nacharbeitungsfreien Ausformen von Bauteilen aus Glas oder aus einer glashaltigen Keramik mit planen und/oder sphärischen und/oder asphärischen Konvex- und/oder Konkav-Flächen hoher Oberflächengüte und Maßgenauigkeit bestehen zunächst einmal darin, daß sie im Gegensatz zu den Einkristall-Materialien keine makroskopische Anisotropie aufweisen. Darüber hinaus besitzen sie eine deutlich geringere Sprödigkeit als entsprechende Einrkistalle. So besitzt polykristallines, dichtes $Al_2O_3$ einen Spannungsintensitätsfaktor $K_{Ic}$ von 4—5 $[MN \cdot m^{-1,5}]$; er liegt also um mehr als doppelt so hoch wie derjenige eines entsprechenden Monokristalls. Damit stellt der polykristalline Werkstoff-Körper für die Lösung der genannten technischen Aufgabe bereits eine bedeutende Verbesserung dar.

In den letzten Jahren wurden überdies Spezialkeramiken beschrieben und entwickelt, die durch ein besonders hervorstechendes Festigkeitsverhalten gekennzeichnet sind. Beispielsweise sind bereits $K_{Ic}$-Werte von 17 $MNm^{-1,5}$ gemessen worden. Hierbie handelt es sich um $ZrO_2$- und/oder $HfO_2$-verstärkte Dispersionskeramiken ("ZTC"-Keramiken: "Zirconia-Toughened Ceramics"). Sie weisen u.a. auch eine ausgezeichnete Thermoschock- bzw. Temperaturwechselbeständigkeit auf, vgl. Berichte der Deutschen Keramischen Gesellschaft, Band 55, Nr. 11, 1978, 487—491.

Werkstoffe der genannten Art können einphasig sein, wie zum Beispiel die "TZP"-Keramiken ("Tetragonal Zirconia Polycrystals"), vgl. die DE—OS 34 08 096, oder auch aus mehreren Phasen bestehen, wie die "PSZ"-Keramiken ("Partially Stabilized Zirconia"), vgl. Nature, Vol. 258, 25.12.1975, 703—704. Infrage kommt weiterhin ein umwandlungs-verstärktes Aluminiumoxid oder entsprechende Keramiken, wie sie etwa aus Journal of the American Ceramic Society, Vol. 68, No. 1, Jan. 1985, C4—C5, bekannt sind.

Als wirksames Oxid ist hierbei das $ZrO_2$ bzw. $HfO_2$ bzw. eine isomorphe Mischkristallform beider genannten Ausgangsglieder anzusehen, welches—gegebenenfalls zusammen mit Oxiden wie CaO, MgO, $Y_2O_3$, $CeO_2$, SE-Oxide—in die Keramik eingebracht werden. Die $ZrO_2$- und/oder $HfO_2$-verstärkten Dispersionskeramiken bestehen in der Regel aus einer Matrix in der $ZrO_2$ und/oder $HfO_2$ fein verteilt—also dispergiert—sind. Die Matrix kann $Al_2O_3$, eine kubische $ZrO_2$-Phase, $Cr_2O_3$ oder beispielsweise ein Vertreter der Spinell-Gruppe (kubisches Doppeloxid) sein.

Die dispergierte, partikuläre $ZrO_2$- und/oder $HfO_2$-Phase liegt bei Herstellungstemperatur der Keramik in tetragonaler Modifikation vor. Die tetragonale Phase hat unterhalb 1150°C die Tendenz, sich in die niedersymmetrische, voluminösere, monokline Phase umzuwandeln. Falls die dispergierten Partikeln in der Matrix sehr feinteilig sind, kann die Phasenumwandlung bis unterhalb der Raumtemperatur "verschoben" bzw. "hinausgezögert" werden, da der Matrix-Druck die mit einer Volumenzunahme verbundene kristallgitterstrukturelle Neuorientierung der Partikel-Bauteile "behindert".

Wird auf das polykristalline Material von außen ein extrem starker Druck ausgeübt, so daß es zur Ausbildung eines Mikrorisses in der Matrix kommt, so wird sich dieser in der Regel nur bis zu einem $ZrO_2$- bzw. $HfO_2$-Teilchen fortsetzten können, wo dann aufgrund des lokal abgeschwächten Matrixdruckes die bislang verhinderte Umwandlung in eine niedersymmetrische, größervolumige Modifikation stattfindet. Dieser Gitterumstrukturierungsprozeß verbraucht Energie, so daß unmittelbar eine Verlangsamung oder sogar ein Abstoppen der Mikroriß-Ausbreitungsgeschwindigkeit die Folge ist. Zudem "verstopfen" die voluminöseren Partikeln gleichsam die entsprechenden Mikrorisse. Auf diese Weise können die Spannungsintensitätsfaktoren und die Festigkeitswerte beträchtlich gesteigert werden.

Eine nochmalige Verbesserung in dieser Hinsicht konnte durch stetige Verringerung der Matrixphase erzielt werden. Durch den Zusatz von $CeO_2$ und $Y_2O_3$ ist es sogar gelungen, eine Keramik zu entwickeln, die ausschließlich aus dispergierter $ZrO_2$-Phase besteht. Es wird gewissermaßen ein "Matrix"-Druck realisiert, ohne daß eine eigentliche "Matrix" im herkömmlichen Sinne vorhanden ist. Es handelt sich dabei um die sog. "TZP"-Keramik ("Tetragonal Zirconia Polycrystals").

Zusätzlich zu allen bereits beschriebenen mechanischen Eigenschaften zeigen alle für die erfindungsgemäße Verwendung vorgesehenen Keramiken noch eine positive Oberflächenverstärkung. Sie ist dadurch bedingt, daß in oberflächennahen Bereichen der allseitig wirkende Matrixdruck fehlt. In der Nähe der Oberfläche wandeln sich schon während der Herstellung der Keramik oberhalb der Raumtemperatur die tetragonalen Partikeln in die voluminösere monokline Modifikation um, so daß Druckspannungen an der Oberfläche auftreten, die zu einer weiteren Verbesserung der Werkstoff-Eigenschaften im Sinne einer Oberflächen-"verfestigung" führen. Druckspannungen an der Werkstoff-Oberfläche lassen sich grundsätzlich durch Schleif- und Polierprozesse infolge lokaler Aufheizung erzielen. Diesen Verstärkungs-Mechanismus nennt man gemeinhin "spannungsinduzierte Umwandlungsverstärkung".

Aber auch dann, wenn die Partikeln gröber sind, so daß sie bei ihrer Herstellung schon vor Erreichen der Raumtemperatur umgewandelt sind, kann der Spannungsintensitätsfaktor $K_{Ic}$ beträchtlich gesteigert werden. Durch die Umwandlung der nun größeren Teilchen entsteht ein Netzwerk von kleinsten Mikrorissen. Wird nun durch eine von außen einwirkende Spannung eine Energie elastisch auf die Keramik übertragen, so wird die Energie auf eine Vielzahl von Mikrorissen verteilt und nicht—wie bei normalen poly- oder monokristallinen nichtmetallisch-anorganischen Körpern—auf einen einzelnen Mikroriß. Den soeben beschriebenen Verstärkungs-Mechanismus nennt man "Mikrorißverstärkung".

Neben den hier beschriebenen materialspezifischen Vorteilen ergibt sich beim Einsatz der genannten Werkstoffe im erfindungsgemäßen Sinne eine drastisch erhöhte Wirtschaftlichkeit, die einerseits ein Resultat der größeren Dauerstandsfestigkeit und andererseits ein Resultat einer wesentlich kostengünstigeren Fertigung dieser Werkstoffe im Vergleich zu den bislang bekannten monokristallinen Materialien ist. Schließlich entfallen auch Dimensionierungsprobleme für die Preßwerkzeuge, die naturgemäß von den jeweils nur zur Verfügung stehenden Einkristall-Volumina abhängig waren.

Die Preßwerkzeuge können die unterschiedlichsten geometrischen Plan-, Konvex- und/oder Konvex-Formen aufweisen. Sie können ein- oder mehrteilig sein. Von besonderem Vorteil für den vorgesehenen Verwendungszweck wirkt sich die schon angesprochene Materialeigenschaft aus, daß beim formgebenden oder spanabhebenden Behandeln der Werkzeuge—also beim Schaffen frischer Oberflächen- (Teil)Bereiche—eben diese Zonen aufgrund des Chemismus, der Matrix/Partikel-Konstellation und vor allem der kristallographischen Matrix/Partikal-Konstitutionen zusätzlich oberflächenverstärkt werden.

Das polykristalline Keramikmaterial kann mittels bekannter Techniken unter Anwendung von erhöhter Temperatur und/oder unter Zuhilfenahme von Druck zu Keramikkörpern mit einer solchen Dichte zusammengefügt werden, die der theoretischen Dichte des jeweiligen Materials entspricht.

**Patentansprüche**

1. Verwendung eines polykristallinen Oxidkeramik-Werkstoffs für Preßwerkzeuge zum Ausformen von Bauteilen aus Glas oder aus einer glashaltigen Keramik hoher Güte und Maßgenauigkeit, dadurch gekennzeichnet, daß er aus einer mehrphasigen $ZrO_2$- und/oder $HfO_2$-verstärkten Keramik besteht, die sich aus einer Matrix-Komponente und mindestens einer in ihr diskret dispergierten Partikel-Komponente zusammensetzt.

2. Verwendung nach Anspruch 1, dadurch gekennzeichnet, daß die Matrix-Komponente eine Keramik aus kubischem und/oder tetragonalem $ZrO_2$ oder aus kubischem und/oder tetragonalem $HfO_2$ oder aus einer kubischen und/oder tetragonalen $(Zr, Hf)O_2$-Mischkristallphase ist.

3. Verwendung nach Anspruch 1, dadurch gekennzeichnet, daß die Matrix-Komponenten aus $Al_2O_3$ und/oder $Cr_2O_3$ bestehen.

4. Verwendung nach mindestens einem der vorhergehenden Ansprüche, dadurch gekennzeichnet, daß die Keramik aus mindestens zwei Matrix-Komponenten besteht.

5. Verwendung nach mindestens einem der vorhergehenden Ansprüche, dadurch gekennzeichnet, daß der Werkstoff aus einer polykristallinen Matrix besteht, in der als diskrete Partikeln $ZrO_2$- und/oder $HfO_2$- und/oder $(Zr, Hf)O_2$-Kristallite homogen verteilt sind.

6. Verwendung nach Anspruch 5, dadurch gekennzeichnet, daß die Partikeln polymorphe Modifikationen aufweisen und im Oberflächenbereich des Werkstoffs jeweils in ihrer niedersymmetrischen Kristallgitterstruktur vorliegen.

7. Verwendung nach Anspruch 6, dadurch gekennzeichnet, daß die Partikeln im Oberflächenbereich des Werkstoffs eine monokline Kristallgitterstruktur und diejenigen im Innenbereich des Werkstoffs eine tetragonale Kristallgitterstruktur aufweisen.

8. Verwendung nach mindstens einem der Ansprüche 5 bis 7, dadurch gekennzeichnet, daß die Partikeln eine Größe zwischen 5 und 5000 nm—vorzugsweise zwischen 100 und 1000 nm—aufweisen.

9. Verwendung nach mindestens einem der vorhergehenden Ansprüche, dadurch gekennzeichnet, daß die polykristalline Matrix-Komponente aus mindestens einer der nachfolgenden Substanzen besteht: kubisches $ZrO_2$, $Al_2O_3$, $Cr_2O_3$, $(Al,Cr)_2O_3$, ein Spinell.

10. Verwendung nach mindestens einem der vorhergehenden Ansprüche, dadurch gekennzeichnet, daß die Matrix-Komponente aus kubischem $ZrO_2$ besteht, in welcher tetragonale $ZrO_2$- und/oder $HfO_2$- und/oder $(Zr, Hf)O_2$-Kristallite als diskrete Partikeln verteilt sind.

11. Verwendung nach mindestens einem der vorhergehenden Ansprüche, dadurch gekennzeichnet, daß die tetragonalen $ZrO_2$- und/oder $HfO_2$- und/oder $(Zr, Hf)O_2$-Partikeln in kohärent auskristallisierter Form in der Matrix vorliegen.

12. Verwendung nach mindestens einem der vorhergehenden Ansprüche, dadurch gekennzeichnet, daß die Keramik zusätzlich mindestens eines der nachfolgend aufgeführten teilstabilisierenden Oxide enthält (in Mol-%):

$Y_2O_3$: 3,5 bis 12, vorzugsweise 8 bis 10
$CeO_2$: 3,5 bis 12, vorzugsweise 8 bis 10
MgO: 6,0 bis 16, vorzugsweise 8 bis 14
CaO: 6,0 bis 16, vorzugsweise 8 bis 14
SE-Oxide: 3,5 bis 12, vorzugsweise 8 bis 10.

13. Verwendung nach mindestens einem der vorhergehenden Ansprüche, dadurch gekennzeichnet, daß die Keramik ein $CeO_2/ZrO_2$-Mol-Verhältnis zwischen 8/92 und 30/70 aufweist.

14. Verwendung nach mindestens einem der vorhergehenden Ansprüche, dadurch gekennzeichnet, daß der Werkstoff ausschließlich aus mindestens einer der für die Matrix-Komponente vorgesehenen Substanz besteht.

15. Verwendung nach mindestens einem der vorhergehenden Ansprüche, dadurch gekennzeichnet, daß zusätzlich bis zu 2 Gew.-% Dotierungsstoffe aus der Gruppe der Oxide MgO, NiO, $WO_3$ und/oder $MoO_3$ vorhanden sind.

16. Verwendung nach mindestens einem der vorhergehenden Ansprüche, dadurch gekennzeichnet, daß der Werkstoff eine Dichte von mindestens 95%—vorzugsweise von 100%—der theoretischen Dichte aufweist.

17. Verwendung nach Anspruch 1, dadurch gekennzeichnet, daß er aus einer einphasigen $ZrO_2$- und/oder $HfO_2$-verstärkten TZP-Keramik ("Tetragonal Zirconia Polycrystals"—Keramik) besteht.

18. Verwendung nach mindestens einem der vorhergehenden Ansprüche, dadurch gekennzeichnet, daß der polykristalline, ein- oder mehrphasige Oxidkeramik-Werkstoff als Material für ein Preßwerkzeug zum nacharbeitungsfreien Ausformen von Bauteilen aus Glas oder aus einer glashaltigen Keramik mit planen und/oder sphärischen und/oder asphärischen Konvex- und/oder Konkav-Flächen hoher Oberflächengüte und Maßgenauigkeit vorgesehen ist.

**Revendications**

1. Utilisation d'un matériau en céramique oxydée polycristalline pour outillage de compression afin de former des éléments en verre ou en une céramique contenant du verre de haute qualité et de haute précision dimensionnelle, caractérisée en ce qu'il se compose d'une céramique renforcée de $ZrO_2$ et/ou $HfO_2$ en plusieurs phases, qui est formée d'une composant de matrice et d'au moins un composant de particules dispersées de manière distincte.

2. Utilisation selon la revendication 1, caractérisée en ce que le composant de la matrice est une céramique de $ZrO_2$ cubique et/ou tétragonal ou bien de $HfO_2$ cubique et/ou tétragonal ou bien en une phase cristalline mélangée de $(Zr, Hf)O_2$ cubique et/ou tétragonale.

3. Utilisation selon la revendication 1, caractérisée en ce que les composants de la matrice sont formés de $Al_2O_3$ et/ou $Cr_2O_3$.

4. Utilisation selon l'une quelconque des revendications précédentes, caractérisée en ce que la céramique se compose d'au moins deux composants de la matrice.

5. Utilisation selon l'une quelconque des revendications précédentes, caractérisée en ce que la matière première se compose d'une matrice polycristalline, dans laquelle son réparties, de manière homogène, en tant que particules distinctes, des cristallites de $ZrO_2$ et/ou $HfO_2$ et/ou $(Zr, Hf)O_2$.

6. Utilisation selon la revendication 5, caractérisée en ce que les particules présentent des modifications polymorphes et sont présentes dans les zones de surface supérieure de la matière première à leur structure de réseau cristallin le moins symétrique.

7. Utilisation selon la revendication 6, caractérisée en ce que les particules présentent, à la zone de surface supérieure de la matière première, une structure de réseau cristallin monoclinique et celles se trouvant à l'intérieur de la matière première, une structure de réseau cristallin tétragonal.

8. Utilisation selon l'une quelconque des revendications 5 à 7, caractérisée en ce que les particules présentent une dimension comprise entre 5 et 5000 nm, avantageusement entre 100 et 1000 nm.

9. Utilisation selon l'une quelconque des revendications précédentes, caractérisée en ce que le composant de la matrice polycristalline ets formé d'au moins l'une des substances qui suivent: $ZrO_2$, $Al_2O_3$, $Cr_2O_3$, $(Al, Cr)_2O_3$ cubique, un spinelle.

10. Utilisation selon l'une quelconque des revendications précédentes, caractérisée en ce que le composant de la matrice se compose de $ZrO_2$ cubique, où sont réparties sous la forme de particules distinctes, des cristallites tétragonales de $ZrO_2$ et/ou $HfO_2$ et/ou $(Zr, Hf)O_2$.

11. Utilisation selon l'une quelconque des revendications précédentes, caractérisée en ce que les particules tétragonales de $ZrO_2$ et/ou $HfO_2$ et/ou $(Zr, Hf)O_2$ sont présentes dans la matrice sous une forme cristallisée cohérente.

12. Utilisation selon l'une quelconque des revendications précédentes, caractérisée en ce que la céramique contient de plus au moins l'un des oxydes stabilisants qui suivent (en % en moles):

| | |
|---|---|
| $Y_2O_3$ | 3,5 à 12, avantageusement 8 à 10 |
| $CeO_2$ | 3,5 à 12, avantageusement 8 à 10 |
| $MgO$ | 6,0 à 16, avantageusement 8 à 14 |
| $CaO$ | 6,0 à 16, avantageusement 8 à 14 |
| Oxydes de SE | 3,5 à 12, avantageusement 8 à 10. |

13. Utilisation selon au moins l'une quelconque des revendications précédentes, caractérisée en ce que la céramique présente un rapport de $CeO_2/ZrO_2$, en moles, compris entre 8/92 et 30/70.

14. Utilisation selon l'une quelconque des revendications précédentes, caractérisée en ce que la matière première se compose exclusivement d'au moins une substance prévue pour le composant de la matrice.

15. Utilisation selon au moins l'une des revendications précédentes, caractérisée en ce qu'il y a de plus jusqu'à 2% en poids d'un agent dopant du groupe des oxydes $MgO$, $NiO$, $WO_3$ et/ou $MoO_3$.

16. Utilisation selon au moins l'une des revendications précédentes, caractérisée en ce que la matière première a une densité d'au moins 95%, avantageusement de 100% de la densité théorique.

17. Utilisation selon la revendication 1, caractérisée en ce qu'elle se compose d'une céramique TZP renforcée de $ZrO_2$ et/ou $HfO_2$ à l'état monophasé (céramique "polycristaux de zircone tétragonale").

18. Utilisation selon au moins l'une des revendications précédentes, caractérisée en ce que la matière première de céramique oxydée polycristalline à une ou plusieurs phases est prévue pour un outil de compression pour la mise en forme, sans traitement ultérieur, d'éléments en verre ou d'une céramique contenant du verre avec des surfaces planes et/ou sphériques et/ou asphériques, convexes et/ou concaves de haute qualité de surface et de grande précision dimensionnelle.

## Claims

1. Use of a polycrystalline oxide-ceramic material for press tools for the shaping of components, which are of glass or of a ceramic containing glass, of high quality and dimensional accuracy, characterised thereby, that it consists of a multiphase ceramic which is reinforced by $ZrO_2$ and/or $HfO_2$ and composed of a matrix component and at least one particle component discretely dispersed in it.

2. Use according to claim 1, characterised thereby, that the matrix component is a ceramic of cubic and/or tetragonal $ZrO_2$ or of cubic and/or tetragonal $HfO_2$ or of a cubic and/or tetragonal $(Zr, Hf)O_2$ mixed crystal phase.

3. Use according to claim 1, characterised thereby, that the matrix components consist of $Al_2O_3$ and/or $Cr_2O_3$.

4. Use according to at least one of the preceding claims, characterised thereby that the ceramic consists of at least two matrix components.

5. Use according to at least one of the preceding claims, characterised thereby, that the material consists of a polycrystalline matrix, in which $ZrO_2$ crystallites and/or $HfO_2$ crystallites and/or $(Zr, Hf)O_2$ crystallite are distributed homogeneously as discrete particles.

6. Use according to claim 5, characterised thereby, that the particles display polymorphous modifications and are present in their respective low-symmetry crystal lattice structure in the surface region of the material.

7. Use according to claim 6, characterised thereby, that the particles in the surface region of the material display a monoclinic crystal lattice structure and those in the inner region display a tetragonal crystal lattice structure.

8. Use according to at least one of the claims 5 to 7, characterised thereby, that the particles display a size of between 5 and 5000 nanometres, preferably between 100 and 1000 nanometres.

9. Use according to at least one of the preceding claims, characterised thereby, that the polycrystalline matrix component consists of at least one of the following substances: cubic $ZrO_2$, $Al_2O_3$, $Cr_2O_3$, $(Al, Cr)_2O_3$ and a spinel.

10. Use according to at least one of the preceding claims, characterised thereby, that the matrix component consists of cubic $ZrO_2$, in which tetragonal $ZrO_2$ crystallites and/or $HfO_2$ crystallites $(Zr, Hf)O_2$ crystallites are distributed as discrete particles.

11. Use according to at least one of the preceding claims, characterised thereby, that the tetragonal $ZrO_2$ particles and/or $HfO_2$ and/or $(Zr, Hf)O_2$ particles are present in the matrix in coherent crystallised form.

12. Use according to at least one of the preceding claims, characterised thereby, that the ceramic additionally contains at least one of the following partially stabilising oxides (in % by molecular weight):

| | |
|---|---|
| Y$_2$O$_3$ | 3.5 to 12, preferably 8 to 10 |
| CeO$_2$ | 3.5 to 12, preferably 8 to 10 |
| MgO | 6.0 to 16, preferably 8 to 14 |
| CaO | 6.0 to 16, preferably 8 to 14 |
| SE oxides | 3.5 to 12, preferably 8 to 10. |

13. Use according to at least one of the preceding claims, characterised thereby, that the ceramic displays a CeO$_2$/ZrO$_2$ molar ratio between 8/92 and 30/70.

14. Use according to at least one of the preceding claims, characterised thereby, that the material consists exclusively of at least one substance provided for the matrix component.

15. Use according to at least one of the preceding claims, characterised thereby, that up to 2% by weight of doping substances from the group of the oxides MgO, NiO, WO$_3$ and/or MoO$_3$ are present in addition.

16. Use according to at least one of the preceding claims, characterised thereby, that the material displays a density of at least 95%, preferably of 100% of the theoretical density.

17. Use according to claim 1, characterised thereby, that it consists of a monophase tetragonal zirconia polycrystalline ceramic which is reinforced by ZrO$_2$ and/or HfO$_2$.

18. Use according to at least one of the preceding claims, characterised thereby, that the polycrystalline, monophase or polyphase oxide-ceramic material is provided as material for a press tool for the shaping, without finishing treatment, of components of glass or of a ceramic containing glass with planar and/or spherical and/or aspherical convex surfaces and/or concave surfaces of high surface quality and dimensional accuracy.